# EUROPÄISCHE PATENTSCHRIFT

(11) **EP 1 838 078 B1**
(45) Veröffentlichungstag und Bekanntmachung des Hinweises auf die Patenterteilung: **05.11.2008**
(21) Anmeldenummer: 07104482.0
(22) Anmeldetag: 20.03.2007
(51) Int. Cl.: H04M 11/02

(54) **Hauskommunikationsanlage**
Door intercom system
Interphone

(30) Priorität: 21.03.2006 DE 202006004395 U
(43) Veröffentlichungstag der Anmeldung: 26.09.2007
(73) Patentinhaber: GIRA Giersiepen GmbH & Co. KG, 42477 Radevormwald (DE)
(72) Erfinder: Dornseiff, André, 51688, Wipperfürth (DE); Heinbach, Hartmut, 57080, Siegen (DE)
(74) Vertreter: Patentanwälte Dr. Solf & Zapf

(56) Entgegenhaltungen:
- DE-A1- 4 412 942
- DE-A1- 10 253 308
- DE-C1- 10 127 029

## Beschreibung

Die vorliegende Erfindung betrifft eine Hauskommunikationsanlage mit mindestens einer Türstation und einer beliebigen Anzahl von Wohnungsstationen, wobei alle Stationen über einen gemeinsamen Zweidraht-Bus verbunden oder verbindbar sind, wobei die Türstation eine Anzahl von den Wohnungsstationen zuzuordnenden Ruftasten aufweist und Mittel vorgesehen sind, um die Anlage zeitweise zur Programmierung der Zuordnung zwischen den Ruftasten und den Wohnungsstationen in einen Programmiermodus zu schalten, und wobei die/jede Wohnungsstation zusätzlich mit einer - außerhalb der jeweiligen Wohnung vor/neben der Wohnungs-Eingangstür angeordneten - Etagenruftaste verbunden oder verbindbar ist.

Eine derartige Hauskommunikationsanlage sowie ein Verfahren zur Inbetriebnahme dieser Anlage sind in der DE 102 53 308 B4 beschrieben. Demnach werden im Programmiermodus, der dort bevorzugt zentral an einem Bussteuergerät aktiviert wird, zunächst alle zu programmierenden Ruftasten der Türstation in einer beliebig gewählten Reihenfolge nacheinander betätigt. Dadurch werden tastenspezifische Adressen entsprechend dieser Reihenfolge separat nacheinander abrufbar in einem Speicher abgelegt. Anschließend werden - entsprechend der gewünschten, vorher festgelegten Ruftasten-Zuordnung - die einzelnen Wohnungsstationen nacheinander in der Reihenfolge der abgelegten Adressen auf die jeweilige Ruftaste programmiert, indem an jeder Wohnungsstation durch Betätigen eines zugehörigen Schaltelementes die entsprechend der abgelegten Reihenfolge jeweils nächste tastenspezifische Adresse aus dem Speicher abgerufen und abgelegt wird. Auf diese Weise kann die Programmierung auch von einem einzelnen Installateur einfach, schnell und komfortabel mit einem Minimum an Laufarbeit durchgeführt werden, weil der Installateur nach der einleitenden Türstation-Programmiersequenz (Drücken der Ruftasten der Türstation nacheinander) nur noch nacheinander in der entsprechenden Reihenfolge zu den einzelnen Wohnungsstationen zu gehen braucht. Dabei kann er von Wohnung zu Wohnung gehen, ohne jeweils dazwischen wieder zur Türstation gehen zu müssen. Dies führt zu wesentlichen Vorteilen der bekannten Anlage. Allerdings können in der Praxis versehentlich Falsch-Programmierungen vorkommen, z. B. wenn versehentlich die Reihenfolge zweier Wohnungsstationen vertauscht wird. Da ein Löschen einzelner Zuordnungsprogrammierungen nur direkt an der jeweiligen Wohnungsstation durch Betätigung eines bestimmten Tasters möglich ist, kann eine Korrektur in solchen Fällen nicht erfolgen, wenn zu den betroffenen Wohnungen gerade kein Zugang möglich sein sollte. Deshalb müßte in solchen Fällen ein neuer Termin mit den Wohnungsbewohnern vereinbart werden, was zu einem zusätzlichen Zeit- und Kostenaufwand führt.

Der vorliegenden Erfindung liegt die Aufgabe zugrunde, eine Hauskommunikationsanlage der beschriebenen Art so zu verbessern, dass eine Korrektur bzw. eine spätere nachträgliche Änderung einer Zuordnungsprogrammierung einer einzelnen Wohnungsstation auch dann problemlos möglich ist, wenn die Wohnung mit der betreffenden Wohnungsstation gerade nicht zugänglich sein sollte.

Erfindungsgemäß wird dies durch die Merkmale des Anspruch 1 erreicht. Vorteilhafte Ausgestaltungen sind in den abhängigen Ansprüchen enthalten.

Demnach ist die bzw. jede Wohnungsstation erfindungsgemäß derart ausgelegt, dass im Programmiermodus eine Betätigung der zugehörigen Etagenruftaste mit einer bestimmten Lösch-Betätigungsdauer als Löschbefehl ausgewertet wird, der ein Löschen der zuvor programmierten Ruftasten-Zuordnung dieser Wohnungsstation bewirkt. Sollte eine Wohnungsstation auf mehrere Ruftasten, beispielsweise auf je eine Ruftaste von mindestens zwei verschiedenen Türstationen programmiert sein, so kann durch den Löschbefehl bevorzugt ein Löschen aller Zuordnungen gleichzeitig bewirkt werden. Es ist aber auch denkbar, durch den Löschbefehl jeweils nur eine von mehreren Ruftasten-Zuordnungen der jeweiligen Wohnungsstation zu löschen, so dass eventuell mehrere Löschbefehle auszulösen sind. Somit ist erfindungsgemäß die/jede Wohnungsstation mit einer Zusatzfunktion ausgestattet, durch die erkannt werden kann, wenn im Programmiermodus der Etagenruftaster eine vorbestimmte Lösch-Betätigungsdauer von beispielsweise neun Sekunden lang betätigt wird, was dann als Löschbefehl interpretiert wird. Dadurch kann auch ohne Wohnungszugang über den Etagenruftaster ein Löschen mindestens einer einzelnen Ruftasten-Wohnungs-Zuordnung erfolgen.

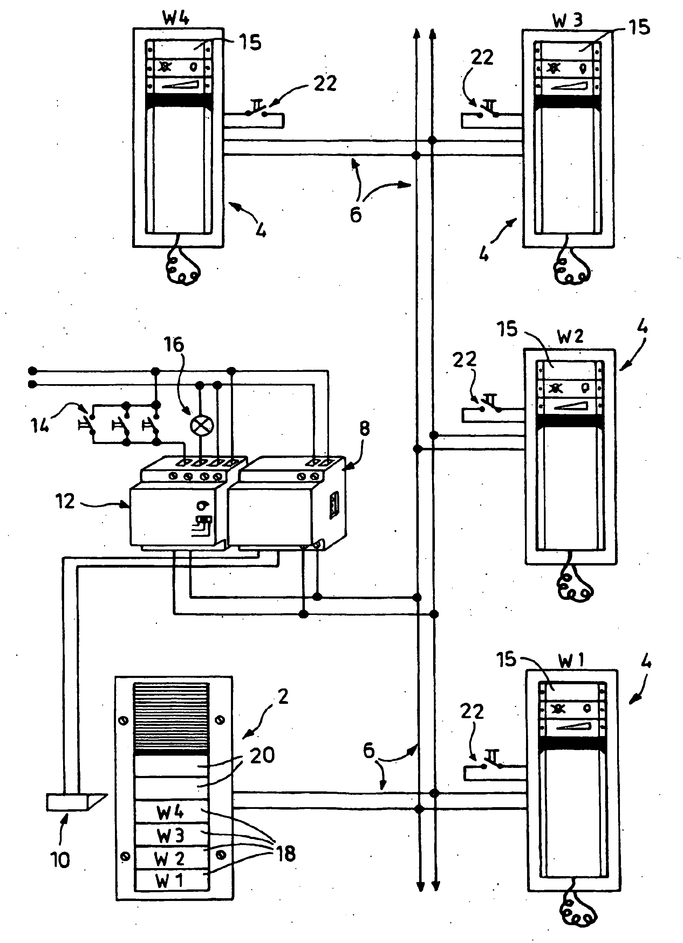

Anhand der Zeichnung soll die Erfindung beispielhaft genauer erläutert werden. Dabei zeigt die einzige Zeichnungsfigur eine schematische, blockschaltbildartige Darstellung eines möglichen Aufbaus einer Hauskommunikationsanlage.

Eine erfindungsgemäße Hauskommunikationsanlage besteht aus mindestens einer Türstation 2 und einer beliebigen Anzahl von Wohnungsstationen 4 (mindestens eine). Die Türstation 2 wird in aller Regel im äußeren Eingangsbereich eines Hauses in der Nähe einer Haustür installiert. Die Wohnungsstationen 4 werden jeweils innerhalb einer Wohnung, insbesondere im inneren Eingangsbereich angeordnet. Alle Stationen 2, 4 sind oder werden über einen gemeinsamen Zweidraht-Bus 6 miteinander verbunden. Weiterhin ist ein Bussteuergerät 8 an den Bus 6 angeschlossen. Dieses Bussteuergerät 8 kann in einer zentralen Elektroverteilung des Hauses untergebracht sein. Weiterhin kann über das Bussteuergerät 8 mindestens ein elektrischer Türöffner 10 einer Haustür angeschlossen werden. Der Türöffner 10 wird über einen Schaltaktor des Bussteuergerätes 8 angesteuert. Weiterhin ist in der Zeichnungsfigur beispielhaft ein zusätzlicher, ebenfalls an dem Bus 6 angeschlossener Schaltaktor 12 dargestellt, der beispielsweise dazu vorgesehen ist, über gesonderte, z. B. in einem Treppenhaus installierte Schaltmittel 14 und/oder über Schaltmittel der Wohnungsstationen (z. B. Licht-Tasten 15) eine Beleuchtung 16, beispielsweise eine Treppenhaus-Beleuchtung, zu schalten.

Die Türstation 2 weist eine bestimmte Anzahl von Ruftasten 18 auf, die den vorhandenen Wohnungsstationen 4 (hier beispielhaft W1 bis W4) zuzuordnen sind. Zusätzlich kann die Türstation 2 weitere Tasten 20 für bestimmte Zusatzfunktionen, wie beispielsweise das Aktvieren einer Beleuchtung, wie auch der Beleuchtung 16, aufweisen.

Weiterhin ist in der Regel jeder Wohnungsstation 4 eine im äußeren Eingangsbereich vor der jeweiligen Wohnung W1 bis W4, beispielsweise in einem Treppenhaus, angeordnete Etagenruftaste 22 zugeordnet, die über Leitungen an Anschlüssen der Wohnungsstation 4 angeschlossen wird.

Zur Inbetriebnahme der Hauskommunikationsanlage wird zunächst die Anlage in einen Programmiermodus geschaltet. Dies erfolgt vorzugsweise durch Betätigen eines Schaltelementes (Programmiertaste) des Bussteuergerätes 8, wobei diese Programmiertaste für eine bestimmte Mindestzeit von beispielsweise 3 Sekunden gedrückt zu halten ist. Der erfolgte Übergang in den Programmiermodus wird zweckmäßigerweise optisch und/oder akustisch signalisiert. Die Anlage befindet sich dann für eine bestimmte Zeit (sogenannte Timeoutzeit) von z. B. 10 Minuten im Programmiermodus und wird dann automatisch wieder aus dem Programmiermodus zurück in einen normalen Betriebsmodus geschaltet, sofern dies nicht schon früher manuell über die Programmiertaste durch eine kurze Betätigung (z. B. kürzer als 3 Sekunden) erfolgt. Die Timeoutzeit wird vorzugsweise selbsttätig durch jede Datenübertragung über den Bus 6 retriggert, d. h. neu gestartet.

Es werden dann im Programmiermodus zunächst alle bezüglich ihrer Zuordnung zu den Wohnungsstationen 4 (W1 bis W4) zu programmierenden Ruftasten 18 der Türstation 2 in einer beliebig gewählten, dann aber für die weitere Programmierung festgelegten Reihenfolge nacheinander jeweils für eine bestimmte Mindestzeit von z. B. 3 Sekunden betätigt. Dadurch werden tastenspezifische Adressen (digitale Codes) entsprechend dieser Reihenfolge so in einem Speicher (sogenannter Programmierpuffer) abgelegt, dass sie nachfolgend separat nacheinander wieder entsprechend ihrer Reihenfolge abrufbar sind. Jede erfolgte Annahme einer Adresse wird vorzugsweise durch einen kurzen akustischen Quittungston von z. B. einer Sekunde Dauer als Hinweis an den Installateur bestätigt, dass die jeweilige Ruftaste 18 losgelassen und die nächste Ruftaste 18 betätigt werden kann.

Nachdem alle Ruftasten 18 entsprechend der dadurch festgelegten Reihenfolge betätigt und dadurch die tastenspezifischen Adressen in dieser Reihenfolge abgelegt wurden, beginnt die Zuordnung der Wohnungsstationen 4, indem nacheinander an jeder Wohnungsstation 4 ein zugehöriges Schaltelement für eine bestimmte Mindestzeit, d. h. für eine Programmier-Betätigungsdauer tₚ von z. B. 3 Sekunden, betätigt wird. Dadurch wird die entsprechend der zuvor abgelegten Reihenfolge jeweils nächste Adresse aus dem Programmierpuffer abgerufen und als Anrufadresse für die jeweilige Wohnungsstation 4 (W1 bis W4) gespeichert.

Diese erfolgte Speicherung wird von der Anlage akustisch durch einen Quittungston und/oder optisch signalisiert. Der Installateur kann dann die entsprechende Programmierung der nächsten Wohnungsstation 4 fortsetzen. Hierbei kann als Schaltelement für diese Programmierung jeder Wohnungsstation 4 ein Taster verwendet werden, der im normalen Betriebsmodus der Anlage eine andere Funktion hat. Dieser Taster erhält somit eine Doppelfunktion. Vorzugsweise wird die Licht-Taste 15 der Wohnungsstation 4 verwendet. Alternativ oder zusätzlich kann für diese Funktion mit Vorteil auch die zugehörige Etagenruftaste 22 verwendet werden, was insbesondere dann vorteilhaft ist, wenn der Installateur gerade keinen Zugang zu der jeweiligen Wohnung und der darin befindlichen Wohnungsstation 4 haben sollte.

Erfindungsgemäß ist nun die/jede Wohnungsstation 4 weiterhin derart ausgelegt, dass im Programmiermodus eine Betätigung der zugehörigen Etagenruftaste 22 mit einer bestimmten Lösch-Betätigungsdauer t_{L} als Löschbefehl ausgewertet wird, der ein Löschen der zuvor programmierten Ruftasten-Zuordnung oder - im Falle von mehreren programmierten Zuordnungen - ein bevorzugt gleichzeitiges Löschen aller Ruftasten-Zuordnungen dieser Wohnungsstation 4 bewirkt. Auch hierbei sind zweckmäßig Mittel zum Erzeugen eines insbesondere akustischen Quittiersignals nach erfolgtem Löschen der Ruftasten-Zuordnung vorgesehen. Bevorzugt wird an der jeweiligen Wohnungsstation 4 ein akustischer Signalton erzeugt. Erfindungsgemäß ist hierbei weiterhin vorgesehen, dass die Lösch-Betätigungsdauer t_{L} mit beispielsweise 9 Sekunden deutlich länger als die Programmier-Betätigungsdauer tₚ von beispielsweise 3 Sekunden oder 6 Sekunden ist. Hierdurch ist eine eindeutige Unterscheidung von Programmierbefehl und Löschbefehl möglich.

Nachdem auf die beschriebene Weise alle Wohnungsstationen 4 den Ruftasten 18 der Türstation 2 zugeordnet wurden, ist der Programmiermodus am Steuergerät 8 wieder zu verlassen.
Bezüglich weiterer Einzelheiten zu der Anlagen-Programmierung wird in vollem Umfange auch auf die eingangs bereits erwähnte DE 102 53 308 B4 verwiesen.

Es ist grundsätzlich beliebig, an welcher Stelle der Anlage der/die Zuordnungsspeicher für die Ruftasten-Zuordnung(en) der/jeder Wohnungsstation 4 angeordnet ist/sind, d. h. der der jeweiligen Wohnungsstation 4 zugeordnete Zuordnungsspeicher muss "hardwaremäßig" nicht notwendigerweise innerhalb dieser Wohnungsstation 4 angeordnet sein.

## Patentansprüche

1. Hauskommunikationsanlage mit Stationen, einschließlich mindestens einer Türstation (2) und einer beliebigen Anzahl von Wohnungsstationen (4),
wobei alle Stationen (2, 4) über einen gemeinsamen Bus (6) verbunden oder verbindbar sind,
wobei die Türstation (2) eine Anzahl von den Wohnungsstationen (4) zuzuordnenden Ruftasten (18) aufweist und wobei die Hauskommunikationsanlage Mittel aufweist, um die Hauskommunikationsanlage zeitweise zur Programmierung der Zuordnung zwischen den Ruftasten (18) und den Wohnungsstationen (4) in einen Programmiermodus zu schalten, und
wobei die/jede Wohnungsstation (4) zusätzlich über Leitungen mit einer Etagenruftaste (22) verbunden oder verbindbar ist,
**dadurch gekennzeichnet, dass** die/jede Wohnungsstation (4) derart ausgelegt ist, dass im Programmiermodus eine Betätigung der zugehörigen Etagenruftaste (22) mit einer bestimmten Lösch-Betätigungsdauer (t_{L}) als Löschbefehl gewertet wird, der ein Löschen einer zuvor programmierten Ruftasten-Zuordnung dieser Wohnungsstation (4) bewirkt.

2. Hauskommunikationsanlage nach Anspruch 1,
**gekennzeichnet durch** Mittel zum Erzeugen eines insbesondere akustischen Quittiersignals nach erfolgtem Löschen der Ruftasten-Zuordnung.

3. Hauskommunikationsanlage nach Anspruch 1 oder 2,
**dadurch gekennzeichnet, dass** die/jede Wohnungsstation (4) ausgelegt ist, um im Programmiermodus für das Programmieren der Ruftasten-Zuordnung eine Betätigung der zugehörigen Etagenruftaste (22) mit einer bestimmten Programmier-Betätigungsdauer (t_{P}) als Programmierbefehl auszuwerten.

4. Hauskommunikationsanlage nach Anspruch 3,
**dadurch gekennzeichnet, dass** die Lösch-Betätigungsdauer (t_{L}) deutlich länger als die Programmier-Betätigungsdauer (tₚ) ist.

5. Wohnungsstation (4) für eine Hauskommunikationsanlage nach einem der Ansprüche 1 bis 4, mit Anschlüssen für den gemeinsamen Bus (6) sowie für die Leitungen zu der zugehörigen Etagenruftaste (22), und mit einem zugehörigen Zuordnungsspeicher für eine tastenspezifische Adresse einer Türstations-Ruftaste (18),
**gekennzeichnet durch** Mittel zum Löschen des Inhalts des Zuordnungsspeichers in Abhängigkeit von einer in einem Anlagen-Programmiermodus erfolgenden Betätigung der zugehörigen Etagenruftaste (22) mit der bestimmten Lösch-Betätigungsdauer (t_{L}).

6. Wohnungsstation nach Anspruch 5,
**gekennzeichnet durch** Mittel zum Feststellen einer Betätigung der zugehörigen Etagenruftaste (22) und zum Überwachen der Dauer dieser Betätigung sowie zum Veranlassen des Löschens des Zuordnungsspeichers bei Erreichen der bestimmten Lösch-Betätigungsdauer (t_{L}).

7. Wohnungsstation nach Anspruch 5 oder 6,
**gekennzeichnet durch** Mittel zum Signalisieren eines erfolgten Lösch-Vorgangs.

## Claims

1. A domicile communication system having stations, including at least one door station (2) and any number of dwelling stations (4), all stations (2, 4) being connected or connectable by means of a common bus (6), the door station (2) having a number of call buttons (18) to be associated with the dwelling stations (4), and the domicile communication system further having means to temporarily switch the domicile communication system into a programming mode in order to program the association between the call buttons (18) and the dwelling stations (4), and the/each dwelling station (4) additionally being connected or connectable via lines to a floor call button (22), **characterised in that** the/each dwelling station (4) is designed such that in programming mode, operation of the related floor call button (22) with a given clearing operation duration (t_{L}) is evaluated as a clear instruction bringing about clearing of a previously programmed call button association of this dwelling station (4).

2. A domicile communication system according to claim 1, **characterised by** means to generate an, in particular acoustic, acknowledge signal after clearing of the call button association has taken place.

3. A domicile communication system according to claim 1 or 2, **characterised in that** the/each dwelling station (4) is designed in order that in programming mode, for the programming of the call button association, an operation of the related floor call button (22) with a given programming operation duration (t_{P}) is to be assessed as a programming instruction.

4. A domicile communication system according to claim 3, **characterised in that** the clearing operation duration (t_{L}) is clearly longer than the programming operation duration (tp).

5. A dwelling station (4) for a domicile communication system according to any one of claims 1 to 4, having connections for the common bus (6) as well as for the lines to the associated floor call button (22), and having a related association store for a button-specific address of a door station call button (18), **characterised by** means to clear the contents of the association store dependent on an operation, taking place in a system programming mode, of the related floor call button (22) with the given clearing operation duration (t_{L}).

6. A dwelling station according to claim 5, **characterised by** means to ascertain operation of the related floor call button (22) and to monitor the duration of this operation as well as to bring about clearing of the association store when the given clearing operation duration (t_{L}) has been reached.

7. A dwelling station according to claim 5 or 6, **characterised by** means to signal that a clearing process has taken place.

## Revendications

1. Interphone comprenant des postes, en particulier au moins un poste de porte (2) et un nombre quelconque de postes d'appartement (4), tous les postes (2, 4) étant reliés ou pouvant être reliés par un bus (6) commun,
le poste de porte (2) présentant un certain nombre de touches d'appel (18) à attribuer aux postes d'appartement (4) et l'interphone présentant des moyens pour commuter l'interphone de façon temporaire pour la programmation de l'attribution entre les touches d'appel (18) et les postes d'appartement (4) dans un mode de programmation, et
le/chaque poste d'appartement (4) étant relié ou pouvant être relié en supplément par des lignes à une touche d'appel d'étage (22),
**caractérisé en ce que** le/chaque poste d'appel (4) est conçu de telle sorte que, dans le mode de programmation, un actionnement de la touche d'appel d'étage (22) spécifique avec une durée d'actionnement d'effacement (t_{L}) définie est considéré comme ordre d'effacement, qui entraîne un effacement d'une attribution de touches d'appel programmée auparavant de ce poste d'appartement (4).

2. Interphone selon la revendication 1,
**caractérisé par** des moyens destinés à produire un signal d'acquittement en particulier sonore après l'effacement de l'attribution de la touche d'appel.

3. Interphone selon la revendication 1 ou 2,
**caractérisé en ce que** le/chaque poste d'appartement (4) est conçu pour considérer dans le mode de programmation, pour la programmation de l'attribution des touches d'appel, un actionnement de la touche d'appel d'étage (22) spécifique avec une durée d'actionnement de programmation (t_{P}) définie comme ordre de programmation.

4. Interphone selon la revendication 3,
**caractérisé en ce que** la durée d'actionnement d'effacement (t_{L}) est sensiblement plus longue que la durée d'actionnement de programmation (t_{P}).

5. Poste d'appartement (4) pour un interphone selon l'une quelconque des revendications 1 à 4, avec des branchements pour le bus (6) commun et pour les lignes allant à la touche d'appel d'étage (22) spécifique, et avec une mémoire d'attribution spécifique pour une adresse spécifique à la touche d'une touche d'appel de poste de porte (18), **caractérisé par** des moyens destinés à effacer le contenu de la mémoire d'attribution en fonction d'un actionnement, effectué dans un mode de programmation d'installation, de la touche d'appel d'étage (22) spécifique avec une durée d'actionnement d'effacement (t_{L}) définie.

6. Poste d'appartement selon la revendication 5, **caractérisé par** des moyens destinés à constater un actionnement de la touche d'appel d'étage (22) spécifique et à contrôler la durée de cet actionnement ainsi qu'à ordonner l'effacement de la mémoire d'attribution lorsque la durée d'actionnement d'effacement (t_{L}) définie est atteinte.

7. Poste d'appartement selon la revendication 5 ou 6, **caractérisé par** des moyens destinés à signaler une opération d'effacement effectuée.
